## Europäisches Patentamt
## European Patent Office
## Office européen des brevets

(19)

(11) Veröffentlichungsnummer: **0 365 545 B1**

# EUROPÄISCHE PATENTSCHRIFT

(12)

(45) Veröffentlichungstag der Patentschrift:
**13.03.91 Patentblatt 91/11**

(51) Int. Cl.$^5$: **B60P 7/13,** B65D 90/00

(21) Anmeldenummer: **88904907.8**

(22) Anmeldetag: **06.06.88**

(86) Internationale Anmeldenummer:
**PCT/DE88/00336**

(87) Internationale Veröffentlichungsnummer:
**WO 88/10202 29.12.88 Gazette 88/28**

(54) **ANORDNUNG ZUM ARRETIEREN VON LADEEINHEITEN.**

(30) Priorität: **19.06.87 DE 8708562 U**

(43) Veröffentlichungstag der Anmeldung:
**02.05.90 Patentblatt 90/18**

(45) Bekanntmachung des Hinweises auf die
Patenterteilung:
**13.03.91 Patentblatt 91/11**

(84) Benannte Vertragsstaaten:
**BE DE FR GB NL SE**

(56) Entgegenhaltungen:
**FR-A- 1 471 857
FR-A- 1 552 977
US-A- 3 722 714**

(73) Patentinhaber: **Westerwälder Eisenwerk
Gerhard GmbH
Ringstrasse 20
W-5241 Weitefeld (DE)**

(72) Erfinder: **GERHARD, Helmut
Im Schlo steinchen 31
W-5241 Weitefeld (DE)**

(74) Vertreter: **Strehl, Schübel-Hopf, Groening
Maximilianstrasse 54 Postfach 22 14 55
W-8000 München 22 (DE)**

EP 0 365 545 B1

**Beschreibung**

Eine Anordnung zum Arretieren von Ladeeinheiten mittels einer Riegelplatte gemäß dem Oberbegriff des Anspruchs 1 ist aus EP-A-189 054 bekannt. Eine Schwierigkeit bei dieser Anordnung besteht darin, daß der Arretierungspunkt im wesentlichen mit der vorderen Kante der Ladeeinheit fluchtet, so daß diese gegen Kippen um die vordere Kante infolge von Verzögerungen des Transportfahrzeugs nicht genügend gesichert ist. Um ein solches Kippen zu vermeiden, sind zusätzliche Maßnahmen erforderlich.

Die bekannte Anordnung sieht ferner vor, daß jede einzelne Ladeeinheit an zwei Drehschlössern oder sonstigen Arretierungselementen mit Hilfe eines entsprechenden Paares von Riegelplatten arretiert wird. Bei Containern, deren Länge - in Fahrtrichtung gemessen - geringer ist als der Abstand aufeinanderfolgender Paare von Arretierungselementen, bedeutet dies, daß die zur Verfügung stehende Ladefläche nicht optimal ausgenutzt werden kann, da zwischen jeder einzelnen Ladeeinheit und der nächsten Platz verbleibt.

Aus US-A-4, 163, 425 ist eine Anordnung bekannt, die dazu dient, Container an der Ladefläche von Fahrzeugen zu verankern, wobei auch daran gedacht ist, zwei Container mit einer gemeinsamen Arretierungseinrichtung zu fixieren. Die Anordnung setzt aber an der Ladefläche speziell gestaltete Verankerungselemente voraus und ist ohne eine solche auch nicht in der Lage, die Container direkt miteinander zu koppeln.

Aus DE-B-1 761 766 ist ferner eine Vorrichtung zum Zusammenkoppeln zweier Container bekannt, die einen zur gemeinsamen Fläche der beiden Container symmetrisch gestalteten Riegelmechanismus zeigt. Trotz seiner verhältnismäßig aufwendigen Konstruktion gestattet der bekannte Mechanismus jedoch keine Arretierung der miteinander gekoppelten Ladeeinheiten an einem Bezugspunkt der jeweiligen Ladefläche. Die gleichen Nachteile gelten für einen weiteren, aus US-A-4, 431, 368 bekannten doppelseitigen Koppelriegel.

Der Erfindung liegt die Aufgabe zugrunde, eine Anordnung anzugeben, die mit geringem Gesamtaufwand ein Zusammenkoppeln zweier Ladeeinheiten gestattet, ein kippfreies Arretieren der gekoppelten Gesamteinheit an auf Transportfahrzeugen üblichen Arretierungelelementen ermöglicht und gleichzeitig die jeweils zur Verfügung stehende Ladefläche optimal nutzbar macht.

Die erfindungsgemäße Lösung dieser Aufgabe ist im Kennzeichenteil des Anspruchs 1 angegeben. Die danach symmetrisch gestaltete Riegelplatte gestattet die gemeinsame Kopplung zweier hintereinander stehender Ladeeinheiten an einem gemeinsamen Arretierungselement. Abgesehen davon, daß die Gesamtzahl der erforderlichen Riegelplatten verringert und damit auch die Handhabung beim Arretieren erleichtert wird, verlagert sich infolge der gegenseitigen Kopplung zweier Ladeeinheiten der Arretierungspunkt in die Mitte der Gesamtanordnung, die dadurch gegen Kippen um beide Querkanten gesichert ist.

Ferner sind jeweils zwei Ladeeinheiten unmittelbar hintereinander angeordnet, so daß bei sonst gleichen Verhältnissen zwischen aufeinanderfolgenden Paaren von Ladeeinheiten doppelte Abstandsräume übrigbleiben, die zur Aufnahme sonstiger Fracht besser nutzbar sind.

Die Weiterbildung der Erfindung nach Anspruch 2 ist für die Handhabung von Vorteil, da sich die Riegelplatte in das Rahmenelement eines Containers völlig hineinschieben läßt. Anspruch 3 ergibt eine besonders einfache Gestaltung des Eckbereichs, da der zum Festhaken der Ladeeinheit an der Riegelplatte erforderliche Stegteil vom Eckbeschlag selbst gebildet wird. Die Gestaltung der Riegelplatte nach den Ansprüchen 4 bis 6 ist bei Verwendung von Drehschlössern als Arretierungselementen insofern von Vorteil, als die obere Fläche der Riegelplatte parallel zur Ladefläche verläuft; gleichzeitig ergibt sich eine zweckmäßige Verstärkung der Riegelplatte im Außenbereich der das Arretierungselement umgreifenden Ausnehmung. Die Weiterbildung der Erfindung nach Anspruch 7 ist mit dem Vorteil verbunden, daß die Riegelplatte nach dem Zusammenschieben der beiden Ladeeinheiten eingeführt und gemäß Anspruch 8 durch Verschwenken an dem Arretierungselement festgelegt werden kann und dabei gleichzeitig eine gegenseitige Kopplung der beiden Ladeeinheiten herbeiführt.

Ausführungsbeispiele der Erfindung werden nachstehend anhand der Zeichnung näher erläutert. Darin zeigt

Figur 1 eine perspektivische Darstellung der aneinanderstoßenden Eckbereiche zweier fluchtend hintereinander stehender Container auf einer mit einem Drehschloß versehenen Ladefläche,

Figur 2 einen Horizontalschnitt durch die Darstellung nach Figur 1 mit der Riegelplatte in ausgeklappter Stellung, und

Figur 3 einen Vertikalschnitt längs der Linie III-III in Figur 1, jeoch ohne Drehschloß.

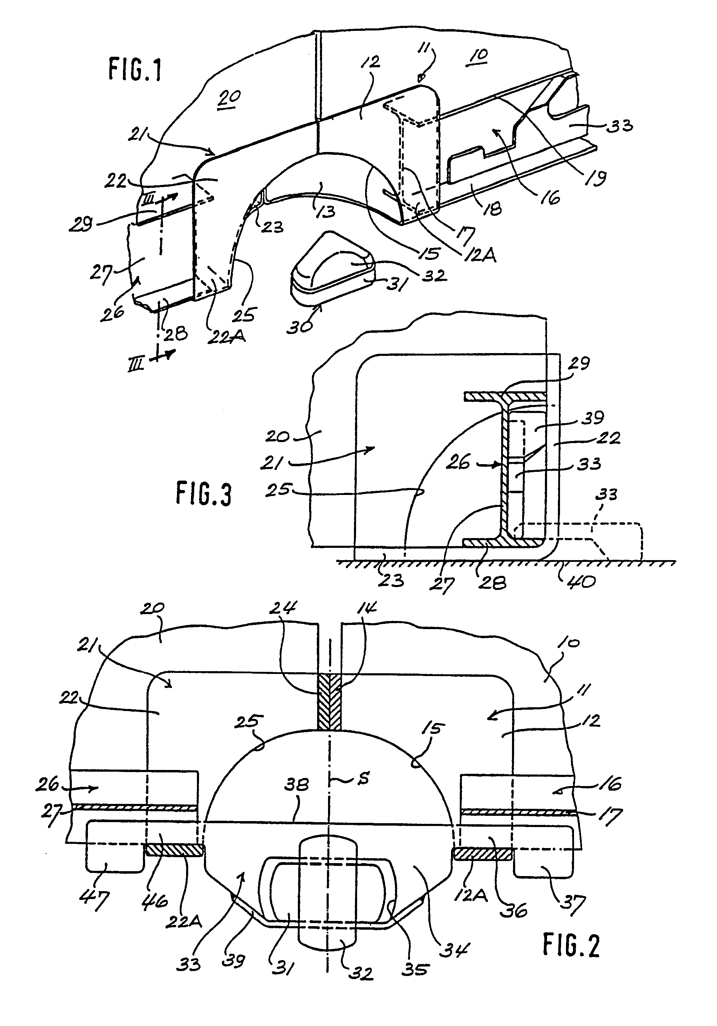

Die in Figur 1 gezeigten aneinanderstoßenden Eckbereiche zweier Container 10, 20 sind jeweils mit einem Eckbeschlag 11 bzw. 21 versehen, wie er aus EP-A-97 269 und ähnlich auch aus der oben erwähnten EP-A-189 054 bekannt ist. Jeder Eckbeschlag 11, 21 weist drei zueinander senkrechte Wände auf, wobei in Figur 1 jeweils die vordere senkrechte Wand 12, 22 und die untere horizontale Wand 13, 23 zu sehen sind. Die dritten, ebenfalls senkrechten Wände 14, 24 der beiden Eckbeschläge 11, 21 sind in der Schnittdarstellung der Figur 2 zu sehen. Die beiden Container sind derart hintereinander angeordnet, daß die Wände 14, 24 der Eckbeschläge aneinanderstoßen, während die Wände 12, 22 in einer Ebene stehen.

Jede der drei Wände 12, 13, 14 bzw. 22, 23, 24 jedes Eckbeschlags 11 bzw. 21 ist mit einem viertelkreisförmigen Ausschnitt versehen, dessen Mittelpunkt an der (gedachten) Spitze des Eckbeschlags liegt. Diese drei Ausschnitte bilden miteinander eine Ecköffnung 15, 25. Die die Ecköffnung 15, 25 bildenden Ausschnitte können anstelle der genannten Viertelkreisform auch anders, etwa rechteckig oder quadratisch, gestaltet sein.

Gemäß der Zeichnung sind die in Container-Längsrichtung verlaufenden unteren Rahmenelemente 16, 26 als I-Profil-Elemente mit jeweils einem aufrecht stehenden Mittelsteg 17, 27, einem unteren Querflansch 18, 28 und einem oberen Querflansch 19, 29 gestaltet. Die quer zu diesen Rahmenelementen 16, 26 verlaufenden weiteren horizontalen unteren Rahmenelemente sowie die Eckstützen der beiden Container sind in der Zeichnung nicht näher dargestellt.

Die in Längsrichtung verlaufenden unteren Rahmenelemente 16, 26 sind jeweils ein Stück in den betreffenden Eckbeschlag 11 bzw. 21 eingeführt, so daß sie hinter der jeweiligen Ecköffnung 15, 25 enden, und sind mit den Innenflächen der senkrechten Wand 12, 22 und der unteren horizontalen Wand 13, 23 verschweißt.

In Figur 1 ist ferner ein Drehschloß 30 gezeigt, das an der Ladefläche angeordnet ist, auf die die beiden Container 10, 20 aufgesetzt sind. Das Drehschloß 30 weist in der Regel einen an der Ladefläche festen Sockel 31 und einen gegenüber diesem um eine senkrechte mittlere Achse drehbaren Kopf 32 auf

Gemäß Figur 1 und 2 sind die Container 10, 20 derart auf der Ladefläche angeordnet, daß die zur Längsrichtung der Rahmenelemente 16, 26 senkrechte Ebene S, in der die Wände 14, 24 der beiden Eckbeschläge 11, 21 aneinanderstoßen, durch die Mitte des Drehschlosses 30 verläuft, und die Ebene, in der die beiden Wände 12, 22 der Eckbeschläge 11, 21 miteinander fluchten, etwas hinter dem Drehschloß 30 liegt.

In der Zeichnung ist ferner eine Riegelplatte 33 dargestellt, die einen mittleren Verriegelungsabschnitt 34 mit einer länglichen Ausnehmung 35 sowie an beiden Seiten ansetzende Arme 36, 46 mit jeweils einem äußeren Hakenabschnitt 37, 47 aufweist. Der mittlere Verriegelungsabschnitt 34, die beiden Arme 36, 46 und die äußeren Hakenabschnitte 37, 47 bilden eine durchgehende geradlinige hintere Kante 38, die in Längsrichtung der Rahmenelemente 16, 26 verläuft, wenn sich die Riegelplatte 33 in einer ihrer in der Zeichnung dargestellten Positionen befindet.

Die Riegelplatte 33 ist bezüglich ihrer Mittelebene symmetrisch gestaltet, wobei diese Mittelebene in der in Figur 2 gezeigten Verriegelungslage mit der oben erwähnten Ebene S zusammenfällt.

In der Verriegelungslage nach Figur 2, in der die Hauptfläche der Riegelplatte 33 horizontal verläuft, ragt der mittlere Verriegelungsabschnitt 34 aus der von den Ecköffnungen 15, 25 der beiden Eckbeschläge 11, 21 gebildeten gemeinsamen Öffnung seitlich heraus. Die Ausnehmung 35 umgreift den Sockel 31 des Drehschlosses 30, dessen Kopf 32 in eine zu dem Sockel 31 senkrechte Stellung gedreht worden ist und damit die Riegelplatte 33 gegenüber der Ladefläche arretiert.

Bei dem gezeigten Drehschloß 30 handelt es sich um ein Drehschloß, wie sie für Eckbeschläge nach ISO 1161 an Containerfahrzeugen und auf Containerschiffen verwendet werden. Demgemäß hat die Ausnehmung 35 eine Form, wie sie bei solchen Eckbeschlägen nach ISO 1161 vorhanden sind.

In der in Figur 2 dargestellten Verriegelungslage liegen die beiden Arme 36, 46 der Verriegelungsplatte 33 auf den unteren Querflanschen 18, 28 der Rahmenelemente 16, 26 auf, und die Hakenabschnitte 37, 47 hintergreifen die unteren Stegteile 12A, 22A der senkrechten Wände 12, 22 der Eckbeschläge 11, 21. Dadurch sind die beiden Container 10, 20 an die Riegelplatte 33 angehakt und miteinander gekoppelt.

Wie in Figur 2 dargestellt, ist die Riegelplatte 33 in Übereinstimmung mit den Eckbeschlägen 11, 21 so gestaltet, daß nur wenig Spiel für eine Bewegung der Container 10, 20 in Längsrichtung besteht. Zwar sind die Arme 36, 46 schmaler dargestellt als der zwischen den Stegteilen 12A, 22A der Eckbeschläge 11, 21 und den senkrechten Mittelstegen 17, 27 der Rahmenelemente 16, 26 vorhandene Raum, doch wird eine Bewegung der Container 10, 20 in Querrichtung dadurch verhindert, daß an der entsprechenden Stelle auf der gegenüberliegenden Seite der Container 10, 20 eine gleiche Arretierung erfolgt.

In Figur 3 ist die Riegelplatte 33 mit gestrichelten Linien in der Verriegelungslage der Figur 2 (jedoch ohne Drehschloß) sowie in ausgezogenen Linien in einer dazu um 90° verschwenkten senkrechten Stellung gezeigt. Um eine derartige Verschwenkung zu gestatten, ist die äußere Kontur des mittleren Verriegelungsabschnitts 34 der Riegelplatte 33 so gestaltet, daß sie durch das von den beiden Ecköffnungen 15, 25 der Eckbeschläge 11, 21 gebildete, in Figur 2 halbkreisförmige Profil hindurchpaßt.

In der entriegelten senkrechten Stellung, die in Figur 3 in ausgezogenen Linien gezeigt ist, läßt sich die Riegelplatte 33 in Längsrichtung der Rahmenelemente 16, 26, etwa an die in Figur 1 gezeigte Position, verschieben, in der sie sich aus dem Rahmenelement 16 herausnehmen läßt. Zu diesem Zweck ist der von den beiden Querflanschen 18, 19 und dem senkrechten Mittelsteg 17 des Rahmenelements 16 gebildete, rechts vom Stegteil 12A gelegene Raum mindestens über die Länge der Riegelplatte 33 nach außen hin offen.

In einer Variante kann es auch zweckmäßig sein, diesen Raum nur über eine kurze Länge nach außen hin frei zu geben, so daß sich die Riegelplatte 33 lediglich zum Verschieben ergreifen läßt, im übrigen aber Maßnahmen vorzusehen, die die Riegelplatte 33 innerhalb des Rahmenelements 16 im entriegelten Zustand unverlierbar festhalten.

Aus der Zeichnung ist ferner zu entnehmen, daß die im Verriegelungsabschnitt 34 der Riegelplatte 33 vorgesehene Ausnehmung 35 auf ihrer Außenseite von einem an die Riegelplatte 33 angeschweißten Materialstreifen 39 begrenzt wird. Der Materialstreifen 39 bildet in der horizontalen Verriegelungslage, die in Figur 3 gestrichelt gezeigt ist, einen nach unten weisenden Vorsprung, dessen Höhe gleich ist der Summe aus der Materialstärke des unteren Querflansches 18 des Rahmenelements 16 und der Dicke der unteren Wand 13 des Eckbeschlags 11. Daher verläuft die obere Fläche der Riegelplatte 33 in der Verriegelungsstellung horizontal, wenn die untere Fläche des Materialstreifens 39 auf der in Figur 3 angedeuteten Ladefläche 40 aufliegt.

Damit die Riegelplatte 33 in der entriegelten Stellung innerhalb des Rahmenelements 16 (oder 26) frei verschiebbar ist, muß ihre größte Breite, die sie gemäß Figur 2 im Bereich des Verriegelungsabschnittes 34 hat, geringer sein als die lichte Höhe des Mittelstegs 17, und der lichte Abstand zwischen dem Stegteil 12A und dem Mittelsteg 17 muß größer sein als die größte Dicke der Riegelplatte 33, d. h. größer als die Breite des die Verdickung bildenden Materialstreifens 39.

In dem obigen Ausführungsbeispiel wurde die Erfindung anhand der gegenseitigen Kopplung und Arretierung von Containern erläutert. Die gleichen Maßnahmen können auch bei Transportplattformen oder sonstigen Arten von Ladeeinheiten vorgesehen sein.

**Ansprüche**

1. Anordnung zum Arretieren von Ladeeinheiten (10, 20), deren untere Rahmenelemente (16, 26) über jeweils eine Ecköffnung (15, 25) aufweisende Eckbeschläge (11, 21) verbunden sind, an einem Arretierungselement (30) mittels einer in Längsrichtung eines Rahmenelements (16) verschiebbaren Riegelplatte (33), die einen durch die Ecköffnung (15, 25) eines Eckbeschlags (11, 21) herausführbaren Verriegelungsabschnitt (34) mit einer Ausnehmung (35) zum Eingriff mit dem Arretierungselement (30) und einen in ihrer Verriegelungslage einen Stegteil (12A, 22A) der Ladeeinheit (10, 20) hintergreifenden Hakenabschnitt (37, 47) aufweist, dadurch gekennzeichnet, daß die durch die Mitte der Ausnehmung (35) verlaufende, zur Verschieberichtung senkrechte Ebene (S) der Riegelplatte (33) in der Verriegelungslage mit der äußeren Querfläche des Eckbeschlags (11, 21) fluchtet und die Riegelplatte (33) zu dieser Ebene (S) im wesentlichen symmetrisch gestaltet ist.

2. Anordnung nach Anspruch 1, dadurch gekennzeichnet, daß die Rahmenelemente (16, 26) I-Profil mit stehendem Mittelsteg (17, 27) aufweisen und die größte Breite der Riegelplatte (33) geringer ist als die lichte Höhe des Mittelstegs (17, 27).

3. Anordnung nach Anspruch 2, dadurch gekennzeichnet, daß der Stegteil (12A, 22A) ein die Flanschaußenkanten des I-Profil-Rahmenelements (16, 26) übergreifender Teil (12, 22) des Eckbeschlags (11, 21) ist.

4. Anordnung nach Anspruch 2 oder 3, dadurch gekennzeichnet, daß der Verriegelungsabschnitt (34) der Riegelplatte (33) an seinem in der Verriegelungslage äußeren Rand einen nach unten weisenden Vorsprung hat, dessen Höhe der Summe aus der Dicke des unteren I-Profil-Flansches (18, 28) und der unteren Wand (13, 23) des Eckbeschlags (11, 21) ist, und daß der lichte Abstand zwischen dem Stegteil (12A, 22A) und dem I-Profil-Mittelsteg (17, 27) größer ist als die Gesamtdicke der Riegelplatte (33) im Bereich des Vorsprungs.

5. Anordnung nach Anspruch 4, dadurch gekennzeichnet, daß der Vorsprung von einem an den Verriegelungsabschnitt (34) angeschweißten Materialstreifen (39) gebildet ist.

6. Anordnung nach Anspruch 5, dadurch gekennzeichnet, daß der Materialstreifen (39) die Ausnehmung (35) nach außen hin begrenzt.

7. Anordnung nach einem der Ansprüche 2 bis 6, dadurch gekennzeichnet, daß der vom Mittelsteg (17, 27) und den Flanschen (18, 19, 28, 29) des I-Profil-Rahmenelements (16, 26) gebildete Raum an der Außenseite der Ladeeinheit (10, 20) anschließend an den Stegteil (12A, 22A) mindestens über eine der Riegelplatte (33) entsprechende Länge freiliegt.

8. Anordnung nach einem der Ansprüche 1 bis 7, dadurch gekennzeichnet, daß die Ecköffnung (15, 25) und der Verriegelungsabschnitt (34) der Riegelplatte (33) so gestaltet sind, daß sich die Riegelplatte (33) zwischen ihrer Verriegelungslage und einer dazu im wesentlichen senkrechten Stellung verschwenken läßt.

**Claims**

1. An arrangement for locking unit loads (10, 20), the lower frame members (16, 26) of which are connected via corner fittings (11, 21) each having a corner opening (15, 25), to a locking member (30) by means of a latch plate (33) movable longitudinally of a frame member (16), the latch plate (33) including a latching portion (34) adapted to be extended from the corner opening (15, 25) of a corner fitting (11, 21) and having a recess (35) for engaging the locking member (30), and a hook portion (37, 47) which, in the latching position of the latch plate, engages behind a web portion (12A, 22A) of the unit load (10, 20), characterised in that, in the latching position, the plane (S) of the latch plate (33), that passes through the centre of the recess (35) and extends perpendicularly to the direction of movement, is in alignment with the outer transverse face of the corner fitting (11, 21), and that the latch plate (33) is formed essentially symmetrically with respect to this plane (S).

2. The arrangement of claim 1, characterised in that the frame members (16, 26) have I-shaped sections with an upright central web (17, 27), and that the maximum width of the latch plate (33) is less than the clear height of the central web (17, 27).

3. The arrangement of claim 2, characterised in that the web portion (12A, 22A) is a part (12, 22) of the corner fitting (11, 21) that overlaps the outer flange edges of the I-section frame member (16, 26).

4. The arrangement of claim 2 or 3, characterised in that the latching portion (34) of the latch plate (33) is provided, at the edge thereof which is the outer one in the latching position, with a downward projection having a height equal to the sum of the thicknesses of the lower I-section flange (18, 28) and the lower wall (13, 23) of the corner fitting (11, 21) and that the clear spacing between the web portion (12A, 22A) and the I-section central web (17, 27) is larger than the total thickness of the latching plate (33) in the vicinity of the projection.

5. The arrangement of claim 4, characterised in that the projection is constituted by a strip of material (39) welded to the latching portion (34).

6. The arrangement of claim 5, characterised in that the strip of material (39) confines the recess (35) outwardly.

7. The arrangement of any one of claims 2 to 6, characterised in that the space defined by the central web (17, 27) and the flanges (18, 19, 28, 29) of the I-section frame member (16, 26) at the outer side of the unit load (10, 20) adjacent the web portion (12A, 22A) is exposed along a length which corresponds at least to that of the latch plate (33).

8. The arrangement of any one of claims 1 to 7, characterised in that the corner opening (15, 25) and the latching portion (34) of the latch plate (33) are designed such that the latch plate (33) can be pivoted between its latching position and a position which is substantially perpendicular thereto.

**Revendications**

1. Agencement pour le blocage d'unités de chargement (10, 20) dont les éléments de cadre inférieurs (16, 26) sont raccordés par l'intermédiaire de pièces de coin (11, 21) présentant chacune une ouverture de coin (15, 25), sur un élément de blocage (30) au moyen d'une plaque de verrouillage (33) déplaçable dans le sens longitudinal d'un élément de cadre (16), qui présente une section de verrouillage (34) pouvant être sortie par l'ouverture de coin (15, 25) d'une pièce de coin (11, 21) et munie d'un évidement (35) destiné à coopérer avec l'élément de blocage (30), et une section à crochet (37, 47) passant dans sa position de verrouillage derrière un élément de traverse (12A, 22A) de l'unité de chargement (10, 20), **caractérisé en ce** que le plan (S) de la plaque de verrouillage (33) passant par le milieu de l'évidement (35) et orienté perpendiculairement à la direction de déplacement coïncide, dans la position de verrouillage, avec la surface transversale extérieure de la pièce de coin (11, 21) et que la plaque de verrouillage (33) présente une conformation sensiblement symétrique par rapport à ce plan (S).

2. Agencement selon la revendication 1, caractérisé en ce que les éléments de cadre (16, 26) présentent un profil en I avec la section médiane (17, 27) en position verticale, et que la largeur maximale de la plaque de verrouillage (33) est inférieure à la hauteur intérieure de la section médiane (17, 27).

3. Agencement selon la revendication 2, caractérisé en ce que l'élément de traverse (12A, 22A) est une partie (12, 22) de la pièce de coin (11, 21), qui recouvre les bords de bride extérieurs de l'élément de cadre (16, 26) profilé en I.

4. Agencement selon l'une des revendications 2 ou 3, caractérisé en ce que la section de verrouillage (34) de la plaque de verrouillage (33) présente sur son bord situé à l'extérieur dans la position de verrouillage, une saillie dirigée vers le bas dont la hauteur est égale à la somme de l'épaisseur de la bride inférieure (18, 28) du profil en I et de la paroi inférieure (13, 23) de la pièce de coin (11, 21) ; et que la distance intérieure entre l'élément de traverse (12A, 22A) et la section médiane (17, 27) du profil en I est supérieure à l'épaisseur totale de la plaque de verrouillage (33) dans la région de la saillie.

5. Agencement selon la revendication 4, caractérisé en ce que la saillie est formée par une bande de matière (39) soudée sur la section de verrouillage (34).

6. Agencement selon la revendication 5, caractérisé en ce que la bande de matière (39) délimite l'évidement (35) vers l'extérieur.

7. Agencement selon l'une des revendications 2 à 6, caractérisé en ce que, sur la face extérieure de l'unité de chargement (10, 20), consécutivement à l'élément de traverse (12A, 22A), l'espace formé par la section médiane (17, 27) et les brides (18, 19, 28, 29) de l'élément de cadre (16, 26) profilé en I, est dégagé au moins sur une longueur correspondant à la plaque de verrouillage (33).

8. Agencement selon l'une des revendications 1 à 7, caractérisé en ce que l'ouverture de coin (15, 25) et la section de verrouillage (34) de la plaque de verrouillage (33) sont conformées de telle façon que la plaque de verrouillage (33) peut être pivotée entre sa position de verrouillage et une position sensiblement perpendiculaire à celle-ci.

FIG.1

20

21

22

29

III

27

26

28

22A

25

12

11

10

33

19

16

13

23

15

17

12A

18

31

32

30

III

FIG.3

20

21

25

29

39

22

26

33

33

23 27 28 40

20

24

14

21

22

25

38

5

15

10

11

12

26

27

16

17

47

46

22A

33 39 31 32 35 34

12A 36 37

FIG.2